# EUROPEAN PATENT SPECIFICATION

(11) **EP 1 417 784 B1**
(45) Date of publication and mention of the grant of the patent: **23.03.2011**
(21) Application number: 02765245.2
(22) Date of filing: 12.08.2002
(51) Int. Cl.: H04B 7/26

(54) **SYSTEM AND METHOD FOR TRANSMITTING INFORMATION AND NETWORK OPERATING CENTRE THEREFOR**
VERFAHREN UND GERÄT ZUR ÜBERTRAGUNG VON DATEN UND NETZBETRIEBSZENTRUM DAFÜR
SYSTEME ET PROCEDE DE TRANSMISSION D'INFORMATIONS ET CENTRE DE SURVEILLANCE DE RESEAU ASSOCIE

(30) Priority: 10.08.2001 NL 1018737
(43) Date of publication of application: 12.05.2004
(73) Proprietor: Cast4All N.V., 1930 Zaventem (BE)
(72) Inventor: MANNAERT, Herwig, Tony, Achiel, Josef, BE-2820 Bonheiden (BE)
(74) Representative: Land, Addick Adrianus Gosling
(86) International application number: PCT/IB2002/003769
(87) International publication number: WO 2003/015311

(56) References cited:
- EP-A- 0 876 029
- EP-A2- 0 779 716
- WO-A-00/60770
- WO-A-99/16201
- US-A- 5 920 701
- CLAUSEN H D ET AL: "Internet services via direct broadcast satellites" PERFORMANCE, COMPUTING, AND COMMUNICATIONS CONFERENCE, 1997. IPCCC 1997., IEEE INTERNATIONAL PHOENIX, TEMPE, AZ, USA 5-7 FEB. 1997, NEW YORK, NY, USA,IEEE, US, 5 February 1997 (1997-02-05), pages 468-475, XP010217025 ISBN: 0-7803-3873-1

## Description

The present invention relates to the transmission of data from a transmitter to a plurality of receivers. For this purpose use can be made of satellite links, since these links are suitable for transmitting by a transmitter and receiving by a number of receivers.

Published patent applications WO 00/60770 A, EP-A-0876029 and EP-A-0779716 discloses examples of such Transmissions.

Satellite links are designed to transmit a data stream. Protocols have been developed for transmitting data of different formats via a digital satellite link.

In order to simplify data transmission on the basis of such protocols, the present invention provides a system for transmitting information as in claim 1.

Using a system according to the present invention it becomes possible for a transmitter to input data relating to data which the transmitter wishes to transmit, whereafter on the basis of this transmission data the control means actuate the transmitting device to transmit the data in the manner desired via the input means.

It is possible for a transmitting device to be provisioned integrally with the input means and the control means. In such a case the transmitter can input the transmission data directly. The input means and control means are for instance software modules operating on a processor of the transmitting device. It is likewise possible in this embodiment for a transmitter to make contact with the system via a computer network and to input the data via another computer and the network.

In another embodiment diverse computers form the system and they are mutually connected. It is possible in such a case for the input means and the control means to operate on separate platforms.

It is further also possible for the input means to operate locally on a computer of a transmitter. In a practical sense this can be embodied as code making use of an Internet browser.

In a preferred embodiment the system further comprises checking means for checking on the basis of the transmission data whether the system has transmitting capacity available for transmitting the information. Such an embodiment has the advantage that a transmitter of information can find out when inputting the transmission data whether capacity is available for transmitting the information as he/she desires. The system for transmitting information of course has a limited capacity at its disposal, at least a part of which a transmitter can use.

In a further preferred embodiment the system comprises at least one ground station for communication via at least one satellite with communication means. As already described, a satellite is particularly suitable for transmitting information from a transmitter to a plurality of receivers. It is further also possible to embody such a transmission schedule of a transmitter to diverse receivers via a network with a suitable protocol. The transmission preferably takes place according to the multicast principle.

In a further preferred embodiment the system comprises receiving devices with satellite receiving means connected to an antenna suitable for receiving signals transmitted by satellites. An advantage hereof is that the system can make use of receiving devices which are adjusted specifically for use with the system.

In a further preferred embodiment the system comprises means for determining to which receivers or receiver groups the information is transmitted. It may not be wished that information being sent is received by all possible receiving devices. In order to prevent information being received by an unauthorized receiver, it is of course possible to encode the information. The system however provides a further option for preventing erroneous distribution of information, i.e. by arranging intrinsically in the system a provisioning that only designated receiving stations will pick up the data.

According to a further embodiment the information comprises one or more files. It hereby becomes possible to transmit discrete files by means of the system. In a further embodiment the information comprises a stream with digital content such as audio or video. Using this embodiment continuous information streams can be transmitted to a plurality of receivers.

The transmission data preferably comprises information relating to the physical location where the information being transmitted is stored. Using this embodiment it is possible for a transmitter to readily indicate which information which is stored where must be sent when and to whom. The system further provides for retrieval of the information from the physical location where the information is stored to the transmitting system. The system will preferably retrieve this information in very good time and in any case store it, until transmission, in a memory or on for instance a hard disc or other back-up memory. The user convenience of the system is enhanced by these provisionings and the reliability of the system is also increased. Transmitting information via the satellite link is relatively expensive compared to temporary data storage.

In a further embodiment the control means further comprise formatting means for formatting and preparing the information for transmission. Since a transmitting system sets determined requirements of the format of the information, this embodiment enables formatting of this information in this suitable format and optional preparation thereof for timely transmission.

In a further preferred embodiment the system further comprises means for converting data packets into a data stream. The conversion of data packets into a data stream is for instance necessary in the use of satellite communication, wherein the data being transmitted is defined as a data stream.

A further aspect of the invention provides a method for controlling an information transmitting system as in claim 15.

This method makes it possible for a transmitter to execute the transmission of data in very simple manner. The transmitter can suffice with inputting the data relating to the information for transmitting, such as for instance time and quantity of the information for transmitting. The system then performs checking steps and provides a confirmation if the information can be transmitted accordingly. As far as the transmitter is concerned the information has then been transmitted and the system will fully execute the transmission.

In a further embodiment the method further comprises steps for preparing transmission of the information, comprising of retrieving information from an information source and storing the information in information storage means of the information transmitting system. It becomes possible here to utilize efficiently the transmitting capacity of the transmitting system as well as to execute the transmission automatically and properly.

A further aspect according to the present invention provides a network operating centre for performing a method as specified above and/or performing functions in a system as specified above. Such a network operating centre forms the central link between the transmitters and the transmitting system. By providing such a network operating centre with the above described functionality, the transmitting options according to the present invention become possible.

Further advantages, features and details of the present invention will become apparent upon reading of the following description, wherein:
- fig. 1 is a schematic view of a first embodiment according to the present invention;
- fig. 2 is a schematic view of an embodiment of a detail of the embodiment of fig. 1;
- fig. 3 is a schematic view of a further embodiment according to the present invention;
- fig. 4 is a schematic view of a further embodiment according to the present invention; and
- fig. 5 is a schematic view of data transport for use in any of the foregoing embodiments.

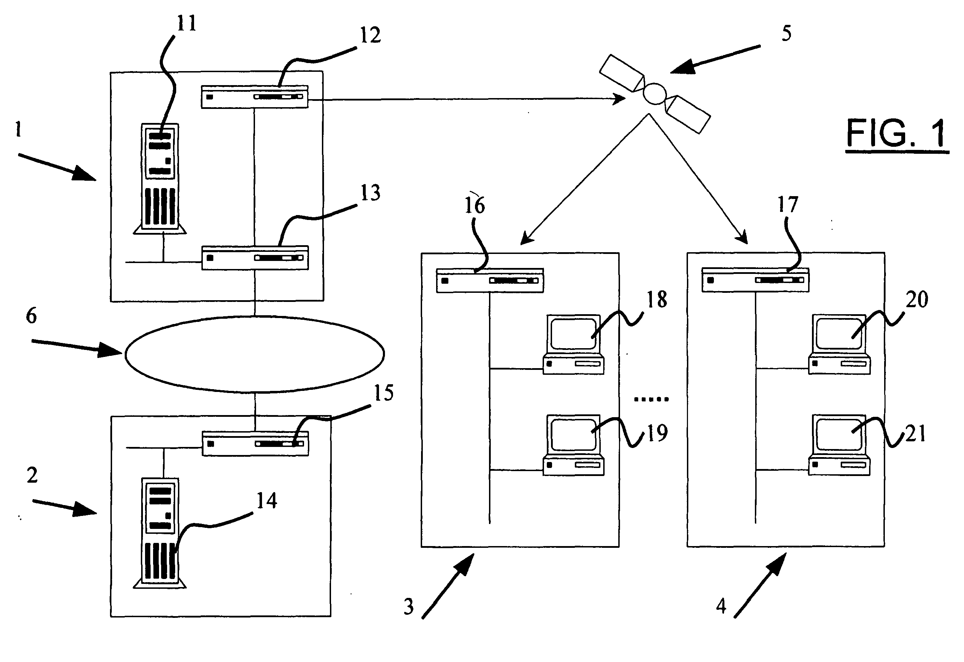

In an embodiment according to the present invention (fig. 1) a network operating centre is present for executing data communication as well as for automated provisioning of a physical connection necessary for the data communication. In a physical sense the network operating centre 1 comprises a computer 11, which is embodied for instance as a server comprising at least a memory and a processor, a network connection 13 which is embodied for instance as a router or another network connection provisioning, and a digital video broadcast device for executing data transmission using a known digital video broadcasting communication standard (DVB). This latter device 12 provides a link with the satellite. Such a satellite link is particularly suitable for executing multicast data communications since it is possible by broadcasting to realize reception within the whole so-called coverage area (Footprint) of the transponder of the satellite.

Network operating centre 1 is connected by means of a data connection 6, such as for instance Internet, a leased-line data connection, ISDN and the like, to transmitters 2 and/or receivers 3,4 of the information being transmitted and received using this embodiment. Transmitter 2 makes use of a computer 14 comprising at least a memory and a processor. In order to connect to the network operating centre the transmitter 2 also has available a transmitting device 15 which can for instance be a router or other type of device for data transport for connection to data connection 6. This transmitting device 15 can also be a modem or the like incorporated into computer 14. What is important is that the computer of transmitter 2 is able to connect to the network operating centre in order to provide the network operating centre with the information for transmitting as well as with transmission data.

Further shown in fig. 1 are receivers 3,4 which have available a satellite receiving device adapted to receive satellite signals. Use is further made herein of a satellite receiving dish (not shown) coupled to a receiving device 16,17. This receiving device 16,17 can be embodied as a dedicated receiving device which is for instance provided with a network card for coupling the receiving device to a LAN of receiver 3,4. In this case computers or workstations 18,19 respectively 20,21 can make use of the information received by receiving device 16 or 17. It is however also possible to provide a single workstation of receiver 3,4 with satellite receiving means, such as for instance a plug-in card, such that a thus equipped workstation can serve as receiving device. As already stated above, receiving device 16,17 is preferably connected to a satellite antenna, such as for instance a standard 90 centimetre dish, for receiving the satellite communication signal. The received signal is converted by means of a low-noise block (LNB). Such an LNB feeds a coaxial cable connected to the receiving device by means of a coaxial connector.

Further functions which are preferably executed after receiving a satellite signal are the conversion of the transmitted data from state-less multicast protocol to for instance the Internet protocol, which requires intensive error correction of the received files.

In addition to the above described physical characteristics of the network operating centre, the network operating centre also comprises software modules which, loaded into the hardware, are functional for performing the method according to the present invention to enable physical data transmission. Transmission of data via the multicast principle requires that physical transmission channels, such as available bandwidth of the DVB transmitting device 12 to satellite 5, as well as transmission bandwidth of a transponder of satellite 5 in the direction of the receivers are available, and that information can be supplied thereto at desired times.

According to the present invention the network operating centre provides a portal for providing access to this bandwidth. A transmitter wishing to transmit information to receivers having at their disposal a receiving option such as for instance the above described receiving device 16,17 for receiving satellite signals can have the network operating centre execute such an information transmission to the desired receiving points in automated manner. Another option for the use of the network operating centre is that a receiver 3,4 instructs a transmitter to transmit data via the network operating centre and the satellite such that the receiver can receive it. For this purpose a receiver is connected to transmitter 2 via a data connection 6. A practical example hereof is that a receiver who wishes to receive a large quantity of data but only has available a connection to for instance Internet or a company network with a small bandwidth such as for instance via a telephone connection of for instance 28,800 bits per second; instructs transmitter 2 to transmit the large quantity of data via the network operating centre and the satellite. This has the advantages, among others, that either the data can be received at high speed or a suitable data connection at low bandwidth remains available for other operations. The transmission of the same data from transmitter 2 to a plurality of receivers 3,4 can further be executed by means of a data transmission via the network operating centre and the satellite.

These logical functions of the network operating centre serve on the one hand to enable the physical data transmission via transmitting device 12 and satellite 5 by, among other things, reserving bandwidth on these transmission channels at predetermined times, and for timely supply of the information for transmitting to transmitting device 12. For this purpose the information which must be transmitted is retrieved in good time by the network operating centre from a data storage of transmitter 2 and for instance temporarily stored in a memory of computer 11. In order to reserve the bandwidth the transmitter 2 further sends transmission data to computer 11 of the network operating centre. Use is then made for this purpose of data connection 6. In the case that streaming data (streaming content, live video) is for instance multicast via the multicast connection, it is important that a data connection with a sufficient and guaranteed bandwidth to enable the data stream is also available over the data communication connection 6.

A further aspect of the logical functions of the network operating centre is maintaining a database in which data relating to available and reserved bandwidth and transmission data is maintained. Using such a database a logical function of the network operating centre can determine whether a request for information transport can be executed using the available capacity. The functions of the software of the network operating centre influence the physical availability of the physical means of the network operating centre. In a logical sense these software components can however operate in a physical sense at locations other than in the physical devices of the network operating centre. Logical functions of the network operating centre are executed by diverse software components, which are described hereinbelow, as long as there is a data connection between computers on which these software components are operated. Various transmitting strategies are distinguished for transmitting information by means of the network operating centre, including network boosting for implementing broadband Internet access, remote Internet access or for instance intranet solutions, network pushing for distributing software to a number of remote destinations, database replications, antivirus updates or for instance media distributions, and/or media streaming for applications such as remote learning, live video/audio, CEO speeches, in-company TV or for instance the launch of a new product. The functionality of the network operating centre is different for each of the transmission types.

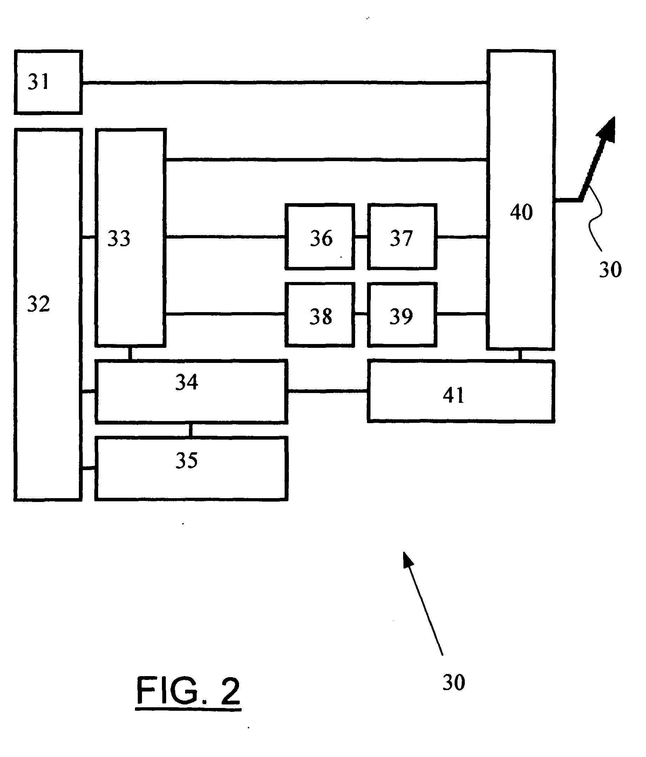

Figure 2 shows the different elements of network operating centre 30. Data which must be transmitted by means of uplink 30 is collected from all over the world by means of data connections such as leased lines or the public Internet, or by means of physical media such as CD, DVD or audio/video tapes. The different types of users of the network operating centre are transmitters and receivers which can each have different roles or profiles in which for instance different user rights of the network operating centre are laid down.

The users make contact with the network operating centre via Role-Based Access Portals 32. This takes place for instance by means of an Internet connection wherein users make contact with the portals using a web-browser. The users can then input transmission data, such as the desired type of data connection, the period of time within which the transmission must take place and the amount of bandwidth required for this purpose.

Data herefor is stored in the Business Management module 34, for instance for the purpose of Customer Billing 41 for sending out invoices, for Document Management module 35 for managing the documents for transmitting, or for the Request Handling Server module 33 for executing the actual data transmission. Module 31 provides for the data acquisition in relation to digital video broadcast module 40.

The management system performs the following functions. Firstly, the retrieval from the databank at a suitable time of an order inputted by the user is executed. All orders in the databank comprise a starting time for the communication service. The system continuously checks which server orders must be carried out at that moment in order to Start the transport provisioning on time. A check is then made as to whether the required bandwidth is available. The DVB gateway has access to a specified communication bandwidth on the satellite. A check is made for each order as to whether the necessary bandwidth is available. Suitable IP routes in the DVB gateway are further defined and adjusted. The DVB gateway packs the IP packets in a DVB stream. The system explicitly inputs all unicast and multicast IP routes into the gateway. All packets corresponding with such routes are then transmitted by means of the DVB stream. The file servers or the servers for streaming content are also controlled and activated. When a file server must transmit a file or a server for streaming content must begin or end a transmission, they are started and stopped at the appropriate times. After the transmission provisioning is created, it is inputted into a database. When the provisioned communication service is started, the status of the provisioning order is changed in the database.

In order to execute the transmissions, Request Handling Server 33 controls DVB module 40 directly or via data storage module 36 and data-delivery transmission module 37 in the case of a file transmission, and via Internet Proxies 38 and TCP Gateway 39 in the case of Network Boost data traffic. In the case of streaming content transmissions, this content is fed directly to transmission module 40 via module 33. It is important here that a sufficient supply bandwidth is available. In the case of file transmission it is recommended that the files for transmission are first stored in storage modules 36. The storage in storage modules 36 can be executed well before the moment of transmission via the satellite, which has the advantage, among others, that the supply bandwidth is of less importance. If a file for transmitting via the satellite is available in the storage means, it can then be transmitted without delay. This transmission is then executed by module 37.

If for instance data from Internet is transported via the network operating centre by means of the transmitting method of network boosting, files or parts of files are stored in module 38 before they are stored by means of module 39 in which routes and receiver groups are added to the data for transmission. All data for transmitting is then multiplexed and transmitted by module 40.

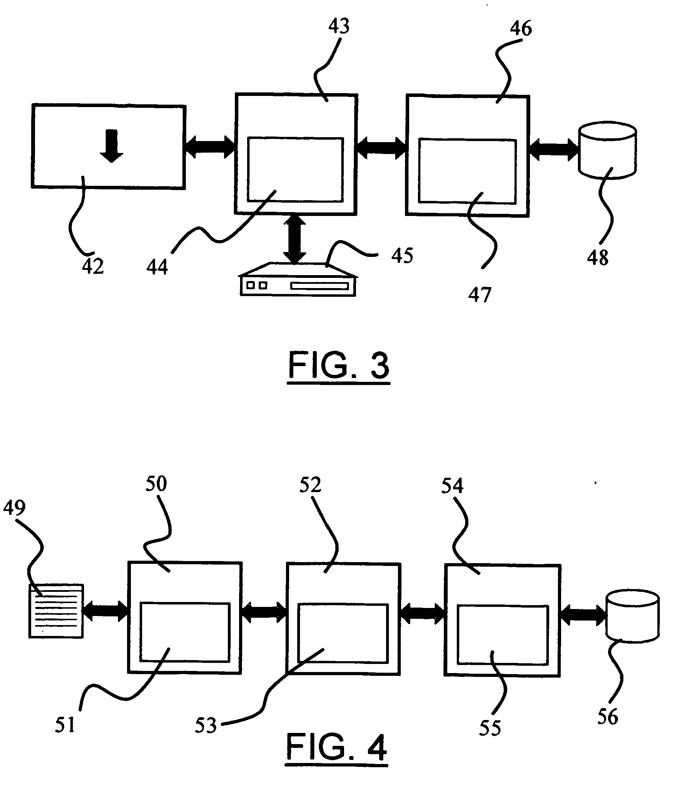

Figures 3 and 4 show further embodiments. In figure 4 is shown the user access for giving data transmission orders. In figure 3 is shown an embodiment for actually transmitting the data in accordance with the transmission orders specified using the embodiment of figure 4. By separating the input of transmission orders and the provisioning thereof, i.e. checking for available capacity and reserving capacity if it is available, it becomes possible that users have no problem with slow or failing provisioning activities.

The access to the system is embodied in accordance with the principle of Role-Based Portals. For this purpose (fig. 4) the user, who has rights according to predefined roles such as main user, account administrator or account user, gains access to the portal via an Internet browser using an HTML interface 49. Behind this HTML interface 49 lies a multilayer web application based on standards such as XML and J2EE (Java 2 Enterprise Edition). The layers in this embodiment are a presentation layer 50; the Internet layer, the Business Logic layer which is represented as "Enterprise Java Beans" (EJB), and the data access layer which is instrumental for exchange of data with database 56. Requests to transmit data via the satellite are inputted in the Java portal code in the web layer. Presentation services in the web layer make use of an XML publication framework which enables a structural separation between the content creation, processing logic and display and formatting. The presentation code obtains access to the application logic in EJB layer 52, which provides transactional integrity and ensures that only complete and validated communication orders are inputted into database 56 and are confirmed to the user. It is also possible to obtain such an access to the EJB application logic by making use of XML interface and EJB client code.

The sequence and execution of all communication and service management tasks are coordinated by a service engine 42 (fig. 3). Such tasks include:
- actually provisioning a transmission order, meaning that non-local data is retrieved, routes are defined in the DVB/IP gateways and routers (12,13 in fig.1), starting and stopping transmission of files and streaming data, creating and changing user groups in gateways and multicast application software.
- network management: allocating and validating file delivery to receiving stations in order to safeguard and maintain such receiving stations, and executing software updates on receiving stations.

A service engine 42 is embodied as a state machine which executes the suitable action at the suitable moment on the basis of checking all communication order states on a continuous basis. For distribution of a file to a specified group of receiving stations, the following actions are for instance executed by the service engine:
- retrieving or downloading the specified file on the appropriate server if necessary;
- executing packet forward error correction on the file as a precaution against packet losses;
- creating the IP multicast route for the specified receiver group with the specified bandwidth just before the specified transmission time;
- transmitting a file via the created route with the specified bandwidth at the specified transmission time;
- checking after transmission on the arrival and validation of the file at the different receiving stations; and
- removing the IP multicast route to validated delivery.

The service engine starts a separate thread for each action which must be executed. After the task has been carried out successfully, the state of the communication must be updated in a single transaction. Fig. 3 shows all of the operations required in this embodiment to execute a single task for creating an IP multicast route in a DVB/IP gateway, these being:
- selection of a service order requiring the creation of a route;
- starting up the new service thread and creating a new service object;
- adjusting the status of the service order to a transition state;
- executing the creation of the route while making use of the suitable implementation object;
- adjusting the status of the service order after the subsequent state; and
- removing the service object and stopping the service thread.

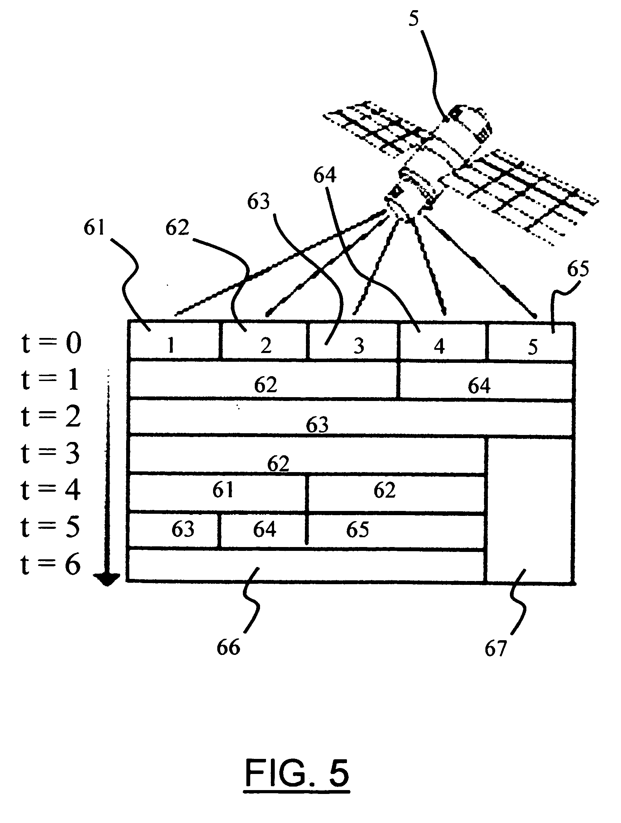

Fig. 5 shows an example of bandwidth use during a time lag of T = 0 to T = 6. A shared amount of bandwidth is available to a number of transmitters wherein the transmitters can enter requests for the use of (a part of) the bandwidth by means of a communication channel. According to an embodiment only the answer comprising the requested data is delivered via a satellite link, wherein the bandwidth is laid out as according to the diagram of fig. 5. The request can be transmitted via any random terrestrial connection such as a modem connection, leased line or a LAN. The bandwidth is made available where it is most required. The shared amount of bandwidth makes it possible, in contrast to leased lines or frame relays, for a desired bandwidth to be made available to individual receiving stations at the time of request. The bandwidth distribution according to fig. 5 is as follows:
- T = 0, all stations request information and are allocated an equal amount of bandwidth;
- T = 1, stations 1,3 and 5 are no longer using any bandwidth. This bandwidth is allocated to stations 2 and 4;
- T = 2, all bandwidth is allocated to station 3;
- T = 3, an application with streaming content is started and receives a fixed amount of bandwidth. Station 2 further obtains a part of the bandwidth;
- T = 4 stations 1 and 2 obtain bandwidth in addition to the application with streaming content;
- T = 5 stations 3,4 and 5 obtain bandwidth in addition to the application with streaming content;
- T = 6 in addition to the application with streaming content, a data bus 66 is provided to all receiving stations.

The present invention is not limited to the above described embodiments. Many variations are possible. The rights sought are defined by the appended claims.

## Claims

1. System for transmitting and receiving information, comprising:
- a transmitting device (15,12) for a plurality of receiving stations (3,4), comprising data storage means (36) and transmitting means (40) for transmitting the information,
- input means (32) for inputting transmission data into the system by the transmitter (2), said data comprising at least data relating to the information and the time of transmission,
- control means (33) for actuating the transmitting device (15, 12) on the basis of the transmission data; **characterised in that** it further comprises
- at least one receiving station (3,4);
- means for checking on the basis of the transmission data whether the system has transmitting capacity available for transmitting the information to said at least one receiving station (3,4);
- a means for allocating and validating file delivery to at least one receiving station (3,4) in order to safeguard and maintain said receiving station (3,4);
- a means for executing software updates on said at least one receiving station (3,4).

2. System as claimed in claim 1, wherein the transmitting device (15,12) comprises at least one ground station for communication via at least one satellite with communication means.

3. System as claimed in claim 1, wherein the transmission takes place according to the multicast principle.

4. System as claimed in claim 1 or 2, comprising receiving devices (16.17) with satellite receiving means connected to an antenna suitable for receiving signals transmitted by satellites.

5. System as claimed in one or more of the foregoing claims, comprising means for determining to which receiving station or receiver groups the information is transmitted.

6. System as claimed in one or more of the foregoing claims, comprising means for starting and stopping the transmission process for the purpose of transmitting the information.

7. System as claimed in one or more of the foregoing claims, wherein the information comprises one or more files.

8. System as claimed in one or more of the foregoing claims, wherein the information comprises a stream with digital content such as audio or video information.

9. System as claimed in one or more of the foregoing claims, wherein the transmitting device (15,12) comprises means for transmitting information via a data network suitable for transmission according to the multicast principle.

10. System as claimed in one or more of the foregoing claims, wherein the transmission data comprises information relating to the physical location where the information being transmitted is stored.

11. System as claimed in one or more of the foregoing claims, wherein the control means (33) comprise means for automatically executing the transmission of the information on the basis of the transmission data.

12. System as claimed in one or more of the foregoing claims, wherein the control means (33) further comprise formatting means for formatting and preparing the information for transmission.

13. System as claimed in one or more of the foregoing claims, wherein the transmitting means or the transmitting device (15,12) further comprises data storage means (36) for storing the information prior to transmission.

14. System as claimed in one or more of the foregoing claims, further comprising means for converting data packets into a data stream.

15. Method for controlling an information transmitting and receiving system, comprising the following steps of:
- inputting by a transmitter into the information transmitting system of transmission data relating to information for transmitting to a least one receiving station,
- checking whether the information transmitting system has the capacity to transmit the information to at least one receiving station in accordance with the transmission data,
- reserving transmission capacity in the information transmitting system in accordance with the transmission data,
- executing transmission of the information to said at least one receiving station;
**characterized in that** it further comprises
- allocating and validating file delivery to said at least one receiving station (3,4) in order to safeguard and maintain said receiving station (3,4);
- executing software updates on said at least one receiving station (3, 4);

16. Method as claimed in claim 15, further comprising steps for preparing transmission of the information, comprising of retrieving information from an information source and storing the information in information storage means of the information transmitting system.

17. Method as claimed in claim 15 or 16, further comprising steps for converting data packets into a data stream.

18. Method as claimed in one or more of the claims 15-17, further comprising steps for starting and stopping the data stream on the basis of the transmission data.

19. Method as claimed in one or more of the claims 15-18, wherein the transmission data is inputted by the transmitter on a computer which is connected by means of a network connection to the information transmitting system.

20. Network operating centre for performing a method as claimed in claims 15-19 and/or suitable for performing functions in a system as claimed in one or more of the claims 1-14.

## Patentansprüche

1. System zum Übertragen und Empfangen von Informationen, umfassend:
- eine Übertragungsvorrichtung (15, 12) für mehrere Empfangsstationen (3, 4), umfassend Datenspeichermittel (36) und Übertragungsmittel (40) zum Übertragen der Informationen,
- Eingabemittel (32) zum Eingeben von Übertragungsdaten in das System durch den Sender (2), wobei die Daten wenigstens Daten umfassen, die sich auf die Informationen und den Zeitpunkt der Übertragung beziehen,
- Steuermittel (33) zum Betreiben der Übertragungsvorrichtung (15, 12) auf Grundlage der Übertragungsdaten;
**dadurch gekennzeichnet, dass** es ferner umfasst:
- wenigstens eine Empfangsstation (3, 4);
- Mittel zum Prüfen auf Grundlage der Übertragungsdaten, ob das System Übertragungskapazität verfügbar hat zum Übertragen der Informationen an die wenigstens eine Empfangsstation (3, 4);
- ein Mittel zum Zuweisen und Validieren einer Dateiübertragung an wenigstens eine Empfangsstation (3, 4), um die Empfangsstation (3, 4) abzusichern und zu erhalten;
- ein Mittel zum Ausführen von Softwareupdates auf der wenigstens einen Empfangsstation (3, 4).

2. System nach Anspruch 1, bei dem die Übertragungsvorrichtung (15, 12) wenigstens eine Bodenstation umfasst für die Kommunikation über wenigstens einen Satelliten mit Kommunikationsmitteln.

3. System nach Anspruch 1, bei dem die Übertragung gemäß des Multicast-Prinzips stattfindet.

4. System nach Anspruch 1 oder 2, umfassend Empfangsvorrichtungen (16, 17) mit Satellitenempfangsmitteln, die mit einer Antenne verbunden sind, die zum Empfang von Signalen geeignet ist, die von Satelliten übertragen werden.

5. System nach einem oder mehreren der vorstehenden Ansprüche, umfassend Mittel zum Bestimmen, an welche Empfangsstation oder Empfängergruppen die Informationen zu übertragen sind.

6. System nach einem oder mehreren der vorstehenden Ansprüche, umfassend Mittel zum Starten und Stoppen des Übertragungsprozesses zum Zweck der Übertragung der Informationen.

7. System nach einem oder mehreren der vorstehenden Ansprüche, wobei die Informationen eine oder mehrere Dateien umfassend.

8. System nach einem oder mehreren der vorstehenden Ansprüche, bei dem die Informationen einen Datenstrom mit digitalem Inhalt wie beispielsweise Audio- oder Videoinformationen umfassen.

9. System nach einem oder mehreren der vorstehenden Ansprüche, bei dem die Übertragungsvorrichtung (15, 12) Mittel umfasst, zum Übertragen von Informationen mittels eines Datennetzwerks, das für die Übertragung gemäß des Multicast-Prinzips geeignet ist.

10. System nach einem oder mehreren der vorstehenden Ansprüche, bei dem die Übertragungsdaten Informationen umfassen, die sich auf den physikalischen Ort beziehen, an dem die zu übertragenden Informationen gespeichert sind.

11. System nach einem oder mehreren der vorstehenden Ansprüche, bei dem die Steuermittel (33) Mittel zur automatischen Ausführung der Übertragung der Informationen auf Grundlage der Übertragungsdaten umfassen.

12. System nach einem oder mehreren der vorstehenden Ansprüche, bei dem die Steuermittel (33) ferner Formatierungsmittel zum Formatieren und Vorbereiten der Informationen zur Übertragung umfassen.

13. System nach einem oder mehreren der vorstehenden Ansprüche, bei dem die Übertragungsmittel oder die Übertragungsvorrichtung (15, 12) ferner Datenspeichermittel (36) umfassen, zum Speichern der Informationen vor der Übertragung.

14. System nach einem oder mehreren der vorstehenden Ansprüche, das ferner Mittel zum Konvertieren von Datenpaketen in einen Datenstrom umfasst.

15. Verfahren zum Steuern eines Informationsübertragungs- und -empfangssystems, umfassend folgende Schritte:
- Eingeben durch einen Sender in das Informationsübertragungssystem von Übertragungsdaten, die sich auf Informationen beziehen, die zu wenigstens einer Empfangsstation übertragen werden sollen,
- Prüfen, ob das Informationsübertragungssystem ausreichend Kapazität hat, um die Informationen zu wenigstens einer Empfangsstation gemäß den Übertragungsdaten zu senden,
- Reservieren von Übertragungskapazität in dem Informationsübertragungssystem gemäß der Übertragungsdaten,
- Ausführen einer Übertragung der Informationen zu wenigstens einer Empfangsstation;
**dadurch gekennzeichnet, dass** es ferner umfasst
- Zuweisen und Validieren einer Dateilieferung an die wenigstens eine Empfangsstation (3, 4), um die Empfangsstation (3, 4) abzusichern und zu erhalten;
- Ausführen von Softwareupdates auf der wenigstens einen Empfangsstation (3, 4);

16. Verfahren nach Anspruch 15, ferner umfassend Schritte zum Vorbereiten der Übertragung der Informationen, umfassend Empfangen von Informationen von einer Informationsquelle und Speichern der Informationen in Informationsspeichermitteln des Informationsübertragungssystems.

17. Verfahren nach Anspruch 15 oder 16, ferner umfassend Schritte zum Konvertieren von Datenpaketen in einen Datenstrom.

18. Verfahren nach einem oder mehreren der Ansprüche 15 bis 17, ferner umfassend Schritte zum Starten und Stoppen des Datenstroms auf Grundlage der Übertragungsdaten.

19. Verfahren nach einem oder mehreren der Ansprüche 15 bis 18, bei dem die Übertragungsdaten durch den Sender auf einen Computer eingegeben werden, der mittels einer Netzwerkverbindung an das Informationsübertragungssystem angeschlossen ist.

20. Netzwerkbetriebszentrum zum Ausführen eines Verfahrens der Ansprüche 15 bis 19 und/oder geeignet zum Ausführung von Funktionen in einem System, wie es in einem oder mehreren der Ansprüche 1 bis 14 beansprucht ist.

## Revendications

1. Système pour transmettre et recevoir des informations, comprenant :
- un dispositif de transmission (15, 12) pour une pluralité de stations de réception (3, 4), comprenant un moyen de stockage de données (36) et un moyen de transmission (40) pour transmettre les informations,
- un moyen d'entrée (32) pour entrer des données de transmission dans le système par le transmetteur (2), lesdites données comprenant au moins des données relatives aux informations et au temps de la transmission,
- un moyen de commande (33) pour actionner le dispositif de transmission (15, 12) sur la base des données de transmission ;
**caractérisé en ce qu'**il comprend en outre
- au moins une station de réception (3, 4) ;
- un moyen pour vérifier sur la base des données de transmission si le système a la capacité de transmission disponible pour transmettre les informations à ladite au moins une station de réception (3, 4) ;
- un moyen pour allouer et valider une remise de fichier à au moins une station de réception (3, 4) afin de sauvegarder et de maintenir ladite station de réception (3, 4) ;
- un moyen pour exécuter des mises à jour logicielles sur ladite au moins une station de réception (3, 4).

2. Système selon la revendication 1, dans lequel le dispositif de transmission (15, 12) comprend au moins une station terrestre pour la communication via au moins un satellite avec un moyen de communication.

3. Système selon la revendication 1, dans lequel la transmission a lieu selon le principe de la multidiffusion.

4. Système selon la revendication 1 ou 2, comprenant des dispositifs de réception (16, 17) avec un moyen de réception satellite connecté à une antenne appropriée pour recevoir des signaux transmis par des satellites.

5. Système selon une ou plusieurs des revendications précédentes, comprenant un moyen pour déterminer à quelle station de réception ou à quels groupes de récepteurs les informations sont transmises.

6. Système selon une ou plusieurs des revendications précédentes, comprenant un moyen pour démarrer et arrêter le processus de transmission afin de transmettre les informations.

7. Système selon une ou plusieurs des revendications précédentes, dans lequel les informations comprennent un ou plusieurs fichiers.

8. Système selon une ou plusieurs des revendications précédentes, dans lequel les informations comprennent un flux avec un contenu numérique comme des informations audio ou vidéo.

9. Système selon une ou plusieurs des revendications précédentes, dans lequel le dispositif de transmission (15, 12) comprend un moyen pour transmettre des informations via un réseau de données approprié pour la transmission selon le principe de la multidiffusion.

10. Système selon une ou plusieurs des revendications précédentes, dans lequel les données de transmission comprennent des informations relatives à l'emplacement physique où les informations qui sont transmises sont stockées.

11. Système selon une ou plusieurs des revendications précédentes, dans lequel le moyen de commande (33) comprend un moyen pour exécuter automatiquement la transmission des informations sur la base des données de transmission.

12. Système selon une ou plusieurs des revendications précédentes, dans lequel le moyen de commande (33) comprend en outre un moyen de formatage pour formater et préparer les informations pour la transmission.

13. Système selon une ou plusieurs des revendications précédentes, dans lequel le moyen de transmission ou le dispositif de transmission (15, 12) comprend en outre un moyen de stockage de données (36) pour stocker les informations avant la transmission.

14. Système selon une ou plusieurs des revendications précédentes, comprenant en outre un moyen pour convertir des paquets de données en un flux de données.

15. Procédé pour commander un système de transmission et de réception d'informations, comprenant les étapes suivantes :
- entrer par un transmetteur dans le système de transmission d'informations des données de transmission relatives à des informations pour la transmission à au moins une station de réception,
- vérifier si le système de transmission d'informations a la capacité de transmettre les informations à au moins une station de réception conformément aux données de transmission,
- réserver la capacité de transmission dans le système de transmission d'informations conformément aux données de transmission,
- exécuter la transmission des informations à ladite au moins une station de réception ;
**caractérisé en ce qu'**il comprend en outre
- l'allocation et la validation d'une remise de fichier à au moins une station de réception (3, 4) afin de sauvegarder et de maintenir ladite station de réception (3, 4) ;
- l'exécution de mises à jour logicielles sur ladite au moins une station de réception (3, 4).

16. Procédé selon la revendication 15, comprenant en outre des étapes pour préparer la transmission des informations, comprenant la récupération d'informations depuis une source d'information et le stockage des informations dans le moyen de stockage d'informations du système de transmission d'informations.

17. Procédé selon la revendication 15 ou 16, comprenant en outre des étapes pour convertir des paquets de données en un flux de données.

18. Procédé selon une ou plusieurs des revendications 15 à 17, comprenant en outre des étapes pour démarrer et arrêter le flux de données sur la base des données de transmission.

19. Procédé selon une ou plusieurs des revendications 15 à 18, dans lequel les données de transmission sont entrées par le transmetteur sur un ordinateur qui est connecté au moyen d'une connexion réseau au système de transmission d'informations.

20. Centre d'exploitation de réseau pour effectuer un procédé selon les revendications 15 à 19 et/ou approprié pour effectuer des fonctions dans un système selon une ou plusieurs des revendications 1 à 14.
